Europäisches Patentamt

European Patent Office

Office européen des brevets

(11) Publication number: **0 418 096 A2**

# EUROPEAN PATENT APPLICATION

(21) Application number: 90310079.0

(51) Int. Cl.5: **H04Q 7/04, H04B 7/26**

(22) Date of filing: 14.09.90

(30) Priority: 14.09.89 GB 8920829
08.01.90 GB 9000370

(43) Date of publication of application:
20.03.91 Bulletin 91/12

(84) Designated Contracting States:
AT BE CH DE DK ES FR GB GR IT LI LU NL SE

(71) Applicant: **PCN ONE LIMITED**
19, Berkeley Street
London W1X 5AE(GB)

(72) Inventor: Smith, Dennis C
6 Carisbrooke court
Romsey, Hants(GB)
Inventor: Tuttlebee, Walter Harold William
51 St Blaize Road
Romsey, Hants SO51 7JY(GB)
Inventor: Waters, Patrick Hugh
3 Sandlewood Close
Calmore, Totton, Hants SO4 2SL(GB)

Inventor: West, Barry
54 Torquay Road
Chelmsford, Essex(GB)
Inventor: Westcott, Andrew Mark Graham
21 Crocus Way
Springfield, Chelmsford, Essex(GB)
Inventor: Rotheram, Stephen
6 Playle Chase
Great Totham, Maldon, Essex(GB)
Inventor: Hightower, Neale
884 Old Tucker Road
Stone Mountain, Georgia 30087(US)
Inventor: Davis, John
201 Hanarry Drive
Lawrenceville, Georgia 30245(GB)

(74) Representative: Colgan, Stephen James et al
CARPMAELS & RANSFORD 43 Bloomsbury
Square
London WC1A 2RA(GB)

(54) Cellular radio communication system for use with low-power remote stations.

(57) A cellular communication system for use with low-power remote stations wherein the system macrocellular regions include local access base stations which are adapted to receive radio signals transmitted within sub-cells of the macrocells and boost and frequency convert these signals for receipt by the base stations of the macrocells.

Fig. 2

# CELLULAR RADIO COMMUNICATION SYSTEM FOR USE WITH LOW-POWER REMOTE STATIONS

## BACKGROUND OF THE INVENTION

This invention relates to radio communication systems and, in particular, to radio communication systems based upon cellular architecture.

Cellular radio communications systems are known in the art in which the region receiving service is segmented into coverage areas or cells. In these systems, each cell is provided with a fixed based station which is able to communicate with remote stations within the cell. The base stations of the cellular system interface with a switching system controller which controls operation of the stations as well provides routing of information between the cells. The switching system controller also provides access of the cellular system to the telephone network so as to permit two-way communication between remote stations in the cells and subscribers to the network.

In the design of cellular systems, it is desired that there be a minimum of overlap between the coverage areas of the cells. The cells are, therefore, designed to cover fixed areas and to be exactly adjacent with as little "wasted" overlap as possible. Unlike traditional radio systems, the boundaries of the cell are defined by the limits of acceptable interference rather than by inherent noise in the channel known as "white" noise. Such system are said to be "interference limited."

In order to minimize any interference which may result from overlap, it is customary to assign different bands or blocks of frequencies to adjacent cells which then define a cluster on the basis of signal to interference ratios at the boundaries between cells. The defined cluster is then repeated to the extent of the coverage region. In this way, the same band of frequencies does not appear on any "edge" between adjacent cells.

Once frequency bands have been allocated to the cells of a cellular system, this fixes or sets the maximum number of customers that can be served at any one time by a cell. This is referred to as the "trunkage" or "capacity" of the cell. It is based on the number of trunks created and is expressed in erlangs or CCSs. Only by splitting a cell into smaller cells and repeating the process or by adding additional frequencies or sub-dividing channels can the cell capacity be increased. As a result, where it is unlikely that additional frequencies will be available, the designer of cellular systems is left with three basic design approaches, none of which is entirely satisfactory. One approach is to design small cells, i.e. so-called "microcells", which have the ability to provide the needed capacity in the later years of system service, but which will likely be underutilized in the earlier years. A second approach is to design large cells, i.e., so called "macrocells", which have the ability of handling immediate capacity needs and are more economical to construct, but which must be split in the later years to accomodate increased capacity.

The third approach is to sub-divide the channels, making more efficient use of the bandwidth available. The negative consequences of this approach include higher cost and potentially reduced performance. Also, there are fundamental limits beyond which capacity cannot be further increased.

As above-noted, none of the three approaches is entirely satisfactory. The smaller cell approach carries with it high initial costs which cannot be justified by the immediate service needs. The large cell approach, on the other hand, allows for reduced initial costs, but relies on cell splitting which is a technically difficult and expensive procedure. Also, channel subdivision can be extremely expensive and difficult.

The above three design approaches become even less satisfactory when the cellular system is called upon to accomodate not only remote stations operating at usual power levels, such as standard mobile telephones, but also so-called "personal stations" which are hand held remote stations operating at much lower power levels, e.g., below about 0.5 W and preferably in the range of 10 to 100 mW. Such low-power remote stations because of their minimal power output, require the use of small cells in order to engage in two-way communication from all points within a cell. Accordingly, for a cellular system to accomodate low-power remote stations and the large numbers of users anticipated for these stations, large scale microcell deployment is required.

However, the deployment of large numbers of microcells with their attendant base stations and connections to the system controller switch carries with it all of the above-discussed problems of microcell design, i.e., very high initial costs and initial underutilization. Also, with small cells, the number of usual hand-offs of a remote station from one cell to another increases dramatically. This creates an operational burden on the controller switch.

It is, therefore, a primary object of the present invention to provide an improved cellular radio communication system.

It is a further object of the present invention to provide a cellular radio communication system which can be efficiently used with low-power remote stations.

It is a further object of the present invention to provide a cellular radio communication system which can be used with low-power remote stations and which is relatively inexpensive to construct.

It is a further object of the present invention to provide a cellular radio communication system which can be used with low-power remote stations and which can be adapted to cost-effectively accomodate an increased numbers of users.

It is yet a further object of the present invention to provide a cellular radio communication system which can be used with low-power remote stations while not substantially increasing hand-off requirements.

It is still a further object of the present invention to provide a cellular radio communication system which can be used with both low-power and high-power remote stations with one basic macrocellular infrastructure.

SUMMARY OF THE INVENTION

In accordance with the principles of the present invention, the above and other objectives are realized in a cellular radio communication system in which a plurality of base station means are employed and are associated with different cellular regions making up the system coverage region. The base station means are each capable of receiving from within their associated cells radio signals which are at a base station receive frequency and which are also at a second power level which is greater than a first power level associated with low-power remote stations to be used in the system. Each base station means is further capable of transmitting signals into its respective cell at a base station transmit frequency.

Also employed in the system is a number of local access base station means. These local access base stations means are segmented into groups, each of which is associated with a different cell of the system. Each local access base station means within a group is further associated with a sub-cell of the associated cell. Furthermore, each local access base station means is capable of receiving low-power remote station signals generated at the first power level from points within its respective sub-cell and retransmitting these signals at the second power level and at the base station receive frequency of the base station of its associated cell.

With this configuration for the cellular system, each cell of the system can be designed as a large cell or macrocell, while its base stations means can also have the capability of two-way communication with the low-power remote stations within its respective cell via the local access base station means. The latter local access base station means thus function as repeaters for the low-power remote station signals generated within their respective sub-cells. Furthermore, with this configuration, since all the local access base station means within a cell retransmit at the same base station receive carrier frequency, hand-off between sub-cells of a cell occurs automatically without any need for switching at the system controller switch. Overburdening of the switch is thus avoided.

The system of the invention can be further enhanced by deploying the sub-cells of a cell such that a given position in a cell is overlapped by at least two and, preferably, three sub-cells. In this way, the signals from a remote station at a given position in a cell will be received and retransmitted to the associated base station means by a least two local access base station means. This provides redundant and increased signal strength at the base station means when these retransmitted signals are suitably combined by equalizers within the low-power remote station, the local access base station means and the base station means.

In further accord with the invention, each local access base station means is further adapted to receive signals transmitted from its associated base station means at the transmit frequency and to retransmit these signals to the low-power remote stations within the respective cell. With this added feature, the local access base station means function as two way repeaters and, if the overlap constraints mentioned previously are maintained, the remote stations will thus also receive at least two retransmitted signals which, when appropriately combined, provide redundancy and added signal strength at the remote stations.

BRIEF DESCRIPTION OF THE DRAWINGS

The above and other features and aspects of the present invention will become more apparent upon reading the following detailed description in conjunction with the accompanying drawings, in which:

FIG. 1 shows an overall system configuration of a cellular radio communication system in accordance with the principles of the present invention;

FIG. 2 shows the cellular configuration of the system of FIG. 1; and

FIG. 3 illustrates the radio path and attendant frequencies in the uplink and downlink direction between a low-power remote station, a local access base station and a base station of the system of FIG. 1; and

FIGS. 4, 5, and 6 show more detailed block diagrams of the low-power remote station, local access base station and base station of the system of FIG. 1.

## DETAILED DESCRIPTION

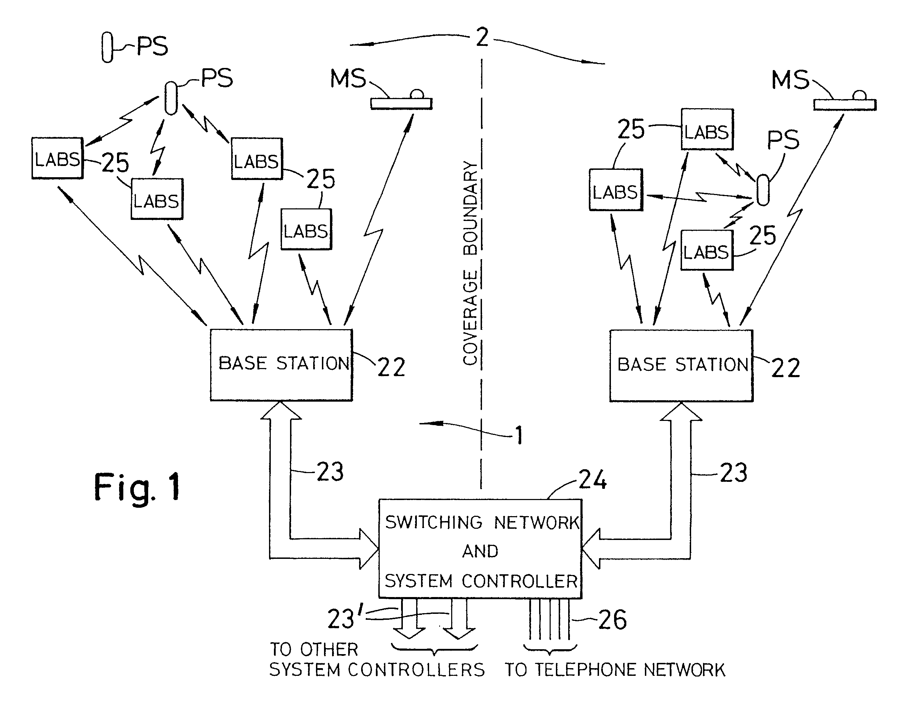

FIG. 1 shows a cellular radio communication system 1 in accordance with the principles of the present invention. The system 1 is to provide communication to and from remote stations which are within a coverage region 2 associated with the system.

As shown, the remote stations include both high-power remote stations MS and low-power remote stations PS. The high-power remote stations may be conventional mobile telephones which transmit radio signals at a first power level typically of the order of about 20 W. The low-power remote stations PS, in turn, may be hand held personal stations which transmit radio signals at a second power level which is lower than the first power level. A conventional hand held personal station might be similar to a cordless telephone which operates at a power level of the order of about 0.6 W. Preferably, however, the remote stations PS operate at a transmit power of less than about 0.5 W and, more preferably, in a range of 10 to 100 mW.

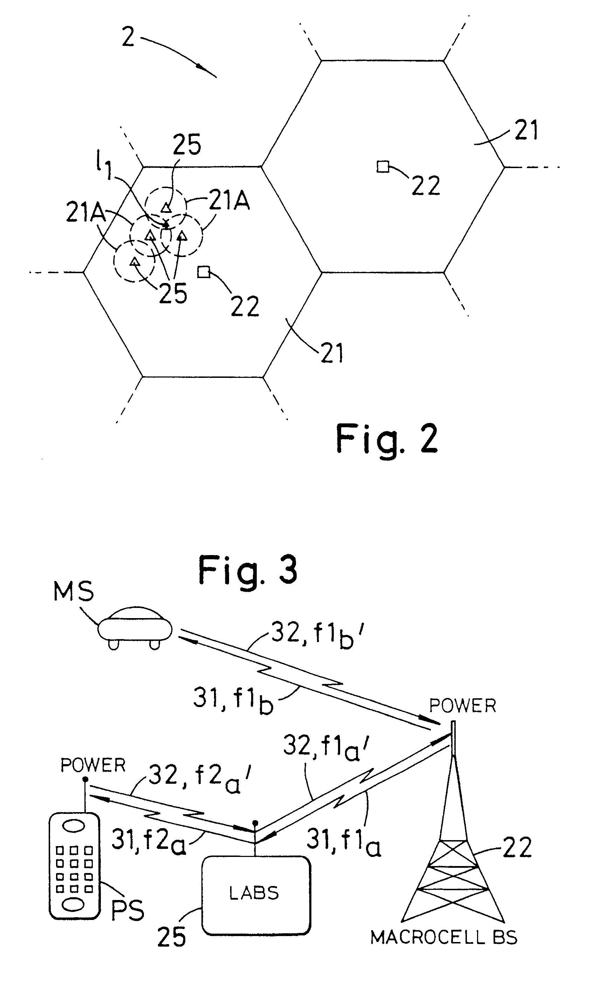

As shown in FIG. 2, the coverage region 2 is segmented in a conventional manner into large cells 21 which are configured or designed as coverage areas for the high power remote stations MS. More particularly, associated with each large cell or macrocell 21 is a base station 22 which is able to receive radio signals from and transmit radio signals to the high-power remote stations MS within its respective macrocell. Each base station 22 operates over a band or block of frequencies (fa, fb) assigned to its macrocell 21 and within a frequency spectrum $(F_A, F_B)$ allocated to the cellular system 1 and preferably within a frequency band between 1.5 and 2.5 GHz. As used herein $(F_A, F_B)$ refer to all frequencies in a band from $F_A$ (lower limit) to $F_B$ (upper limit). Similarlay (fa, fb) refers to all frequencies in the band from fa to fb. In usual fashion, the bands of frequencies assigned to the cells 21 are selected so that adjacent cells are assigned different bands in order to minimize interference effects.

The base stations 22 of the macrocells 21 communicate over fixed lines or other fixed links 23 with a common switching network and system controller 24. The controller 24 directs the operation of the base stations 22 and provides routing of signals therebetween as well between itself and other controllers via fixed lines or other fixed links 25 and a telephone network via trunk lines 26.

As described to this point, the system 1 is of conventional cellular type and the macrocells 21, base stations 22 and controller 24 may be designed in standard fashion to perform the usual functions of equipment of this type. In this regard, the base stations 22 are provided with a significant amount of so-called "intelligence" which enable the base stations to perform their usual functions. Also, the base stations typically communicate by time division multiplexing of their respective carriers, in which case time slots in the multiplexed carriers define the voice, data and control channels of the system 1.

As discussed above, the system 1 is not only intended to provide communication for the high-power remote stations MS, but also for the low-power remote stations PS. Because of the lower transmit power of the stations PS and the design of the macrocells 21 based upon the higher transmit power of the stations MS, it can be appreciated that the transmit signals from the stations PS will be received by the base station 22 of a particular macrocell 21 from only limited locations within the cell. Accordingly, in accordance with the principles of the present invention, the system 1 is further adapted to allow the low-power remote stations PS to transmit signals from additional locations within and reaching the borders of a cell 21 and still be received by the base station 22 of the cell.

This is accomplished, in accordance with the invention, by including in each macrocell 21 a number of local access base stations (LABS) 25. Each of the stations 25 is able to receive transmit signals at the second power level from low-power remote stations PS within an associated sub-cellular region 21A of its respective macrocell 21 and retransmit these signals at the first power level so as be receivable by the respective base station 22 of the cell. Each local access base station 25 thus acts primarily as a repeater, repeating the received signals from low-power remote stations PS within its associated sub-cell 21A and boosting them for receipt by the associated base station 22.

In further accord with the invention, the local access base stations 25 are also adapted to receive signals transmitted from their respective base stations 22 and retransmit these signals so as to be receivable by any low-power remote stations PS within their respective sub-cells regions 21A. With this further adaptation, the local access base stations 25 thus act as two-way repeaters providing full duplex operation.

FIG. 3 shows a typical transmit and receive radio link established between a low-power remote station PS and a base station 22 via a local access base station 25. As shown, the base station 22 transmits downlink a radio signal 31 at the carrier frequency $f1_a$ which is received by the local access base station 25. The station 25 then rebroacasts or restransmits the signal 31 further downlink at a second carrier frequency $f2_a$ for receipt by the low-power remote station PS. In the uplink direction, the low-power remote station transmits a radio signal 32 at the first power level and at the frequency $f2_a{}'$. This signal is then received by the local access base station 25 and retransmitted further uplink at the second power level and at a further carrier frequency $f1_a{}'$. This signal is then received by the base station 22 and processed in the usual manner.

The local access base stations 25 thus act not only to boost the signals received from the low power remote stations PS within their respective sub-cells 21A, but also to frequency translate or convert these signals when rebroadcasting. The use of frequency conversion in the uplink direction advantageously prevents the radio signals transmitted from the high-power remote stations MS at the frequency $f1_a{}'$, from interfering with the radio signals of the low-power remote stations PS at the local access base stations 25. Furthermore, because of the signal boosting and frequency conversion, the low power remote stations PS look like high-power remote stations to the base stations 22 and, therefore, transparent operation is achieved. Also, the high-power remote stations MS can communicate with the base stations 22 directly by using another frequency set, $f1_b$ and $f1_b{}'$.

A typical set up of a communication link with a low-power remote station PS might be as follows. The low-power remote station PS monitors a control channel of a particular base station 22 via rebroadcast of this channel by one or more local access base stations 25 within range of the low-power remote station. Upon receipt of an alerting message for the low-power remote station PS from the base station 22, the local access base stations 25 rebroadcast this message. The low-power remote station PS, upon receipt of the message, transmits an initial signal burst which is received by the local access base stations in range and causes them to open their rebroadcast equipment.

This signal burst is following at the low-power remote station PS by a paging acknowledgement, which is received by the local access base stations 25 and rebroadcast to the base station 22. Upon receipt of this acknowledgement, the base station 22 allocates a transmission channel to the low-power remote station PS and allows communication in usual fashion with the station.

A low-power remote station PS wishing to initiate a communication, in turn, will first provide a signal burst which is received by the local access base stations 25 in range. This signal burst again causes the stations 25 to activate their respective rebroadcast equipment. Once this occurs, transmission set-up and communication will proceed in usual fashion.

In order to enhance the communication with the low-power remote stations PS, the local access base stations 25 are further arranged so that for at least one or more locations $l_1$ in a cell 21, a plurality and, as shown, preferably three, sub-cells 21A include the location. This arrangement of the stations 25 provides overlap of the sub-cells 21A with respect to the location $l_1$ and, therefore, diversity of operation for the radio signals transmitted to and from this location. This principle is described in the literature and is known as macro-diversity.

More particularly, because of this overlap, downlink transmissions at the frequency $f1_a$ from a base station 22 are received by the local access base stations 25 having the overlapping sub-cell regions 21A. The latter stations, in turn, retransmit or rebroadcast the received base station signals simultaneously at the frequency $f2_a$ to the low-power remote station PS at the location $l_1$. The lower-power remote station PS thus receives three signals with different time delays because of the different locations of the local access base stations 25. By conventional equalization within the low-power remote station PS, these three signals are then combined to provide redundancy and enhanced signal strength, without the usual effects of multipath interference.

In the uplink direction, like diversity is also achieved. More particularly, the uplink signal from the low-power remote station PS at the frequency $f2_a{}'$ is received by the three local access base stations 25 having overlapping sub-cells 21A. These signals are simultaneously and immediately retransmitted by the local access base stations at the second power level and at the converted frequency $f1_a{}'$ for receipt by the associated base station 22. At the base station 22, the three received signals, which again are differently delayed because of the different locations of the base stations 25, are equalized to provide redundancy and enhanced signal strength. This principle is described in the literature and is known as micro-diversity.

In order to prevent local access base stations 25 whose sub-cells 21A are at the fringe of an overlap area from rebroadcasting on the uplink substantially noise with a minimal of signal, the stations 25 may be placed in the rebroadcast or retransmit mode only upon receipt of signals of a minimum level from a low-power remote station PS. The stations 25 may thus be provided with conventional signal detection and analysis equipment for this purpose. More particularly, this equipment will examine initial signal bursts sent by the low-power remote stations PS before a transmission. If the results of this examination indicate that the signal bursts satisfy the minimum signal level criteria, the corresponding local access base station will then be activated.

In providing the aforementioned diversity operation in the uplink direction, it is important that the boosted retransmitted signal provided by each local access base station 25 resolve and eliminate the multipath distortion of the received signal. The amplication characteristic of the amplification equipment of each station 25 must, therefore, be linear over a dynamic range suitable to accomplish this purpose. This is realized by use of suitable fast acting automatic gain control circuitry in the amplication equipment.

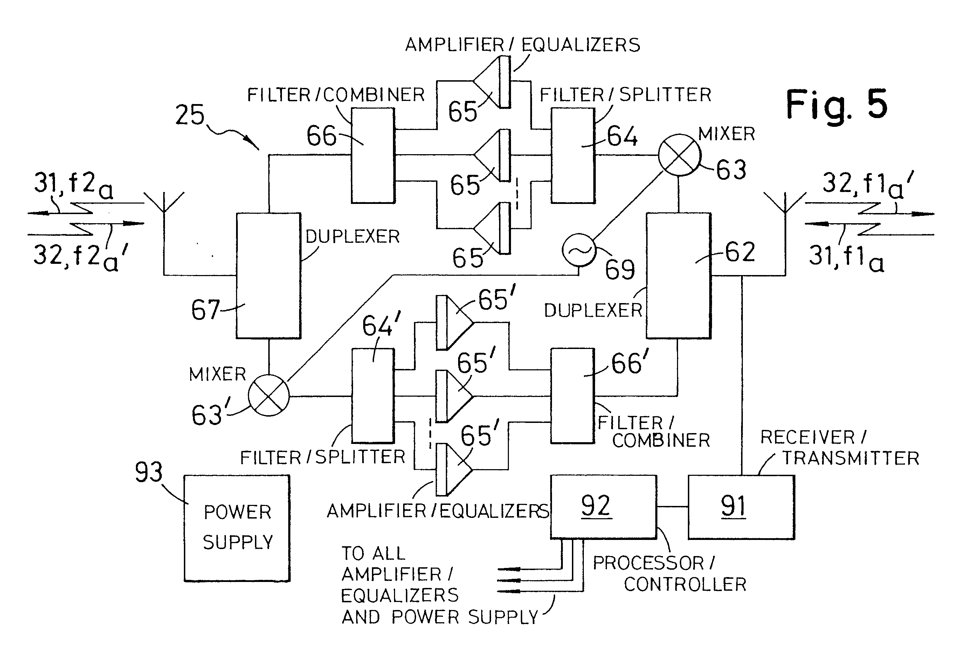

Each local access base station 25 also contains equipment for monitoring the control channels of its respective base station 22 as well as equipment for decoding the signals in these channels. This allows the local access base stations 25 to receive both frequency and time synchronization information from the respective base stations. It also allows the base stations 22 to advise their respective local access base stations as to the carriers in use in the associated cell 21 as well as to advise them of the carriers to be used in the transmission between the local access base stations and the low-power remote stations PS. These functions are performed by the receivers, transmitters, processor and controller and other equipment shown in FIGS. 5, 6 and 7.

It should be noted that with the design of the system 1 as above-described, automatic hand-off occurs within each macrocell 21 with respect to movement of a low-power remote station PS between sub-cells 21A of the cell. This occurs because the local access base stations 25 all transmit and receive radio signals within the same frequency band as their adjacent cell 21. Since hand-offs intra-cell are automatic, the switching network and system controller 24 is not required to provide switching for the local access base stations 25 within a cell 21. The local access base stations 25 thus advantageously do not add to the switching burden of the controller.

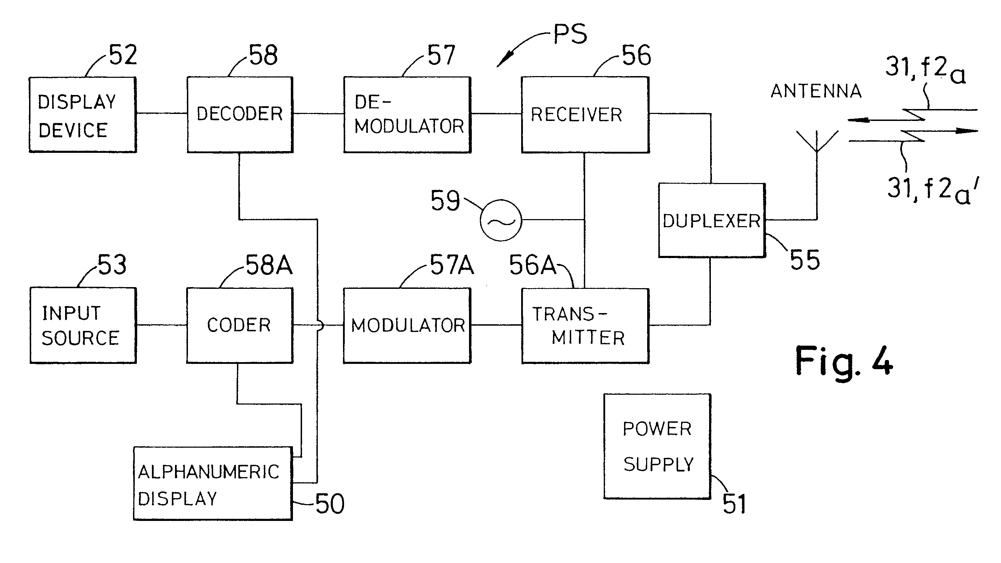

FIG. 4 illustrates a typical low-power, hand held remote station PS. As shown, the station PS is powered by a supply 51 (typically a battery) and is of conventional design. While the display device 52 and input source 53 of the station PS are shown as primarily for voice inputs, any digital data could be input or output through the station. From the antenna 54, received signals 31 are coupled by a duplexer 55 to a receiver 56. The duplexer 55 may operate on time, frequency or code division principles depending upon the signal 31.

The receiver 56 conveys the signal to a demodulator 57 and a decoder 58 before being sent to the display device 52. Digital error correction can occur in the demodulator 57, the decoder 58, the receiver 56 or in a separate error correction stage located between the receiver and the demodulator or the demodulator and the decoder. The receiver 56 includes an in-band equalizer to resolve multipath and multipath-like distortion.

The transmitter chain of the station PS is similar to the receiver chain. Input signals from source 53 are coded in coder 58A as necessary, modulated onto a carrier via modulator 57A and transmitted through transmitter 56A. Forward error correction may be included in the coder or modulator and a common reference frequency source 59 feeds the modulator 57A, demodulator 57, transmitter 56A and receiver 56.

An alphanumeric display 50 is used for a variety of purposes including the display of incoming and outgoing traffic information, or for diagnostic messages in the event of failure. The data for this display is coded onto the existing digital bit streams in the transmitter and receiver.

FIG. 5 is a block diagram of one embodiment of a typical LABS 25. Beginning at the antenna 61 receiving base station signals 31, these signals are received as they would be received by a conventional high-power mobile remote station receiver. More particularly, the received signals are passed via a duplexer 62 to a mixer 63 where they mixed with an offset oscillator signal. The output of mixer 63 is then delivered to a filter/splitter assembly 64 where the signal is separated into sub-bands as necessary and sent to one or more amplifier/equalizers 65. Each amplifier/equalizer 65 contains an in-band equalizer and AGC/AFC circuitry. Each amplifier/equalizer 65 resolves any multipath problems of its respective signals, provides appropriate gain according to a preset schedule, and delivers the signals to an output filter/combiner bank 66. Here the signals from amplifier/equalizers 65 are combined and the combined signal delivered to a further duplexer 67. The latter feeds a further antenna 68 which transmits the resultant signal downlink to the low-power remote stations PS.

The channel for the uplink signals in the LABS is similar to the down-link channel. It comprises mixer 63', filter/splitter 64', amplifier/equalizers 65' and filter combiner 66'. A common reference oscillator 69 feeds both mixers 63 and 63' and the unit is supplied power by power supply 93.

A receiver/transmitter 91 and a processor/controller 92 provide diagnostic and control information including alarms. They also provide a means of controlling the base station in the event of failure or changes in configuration as previously described.

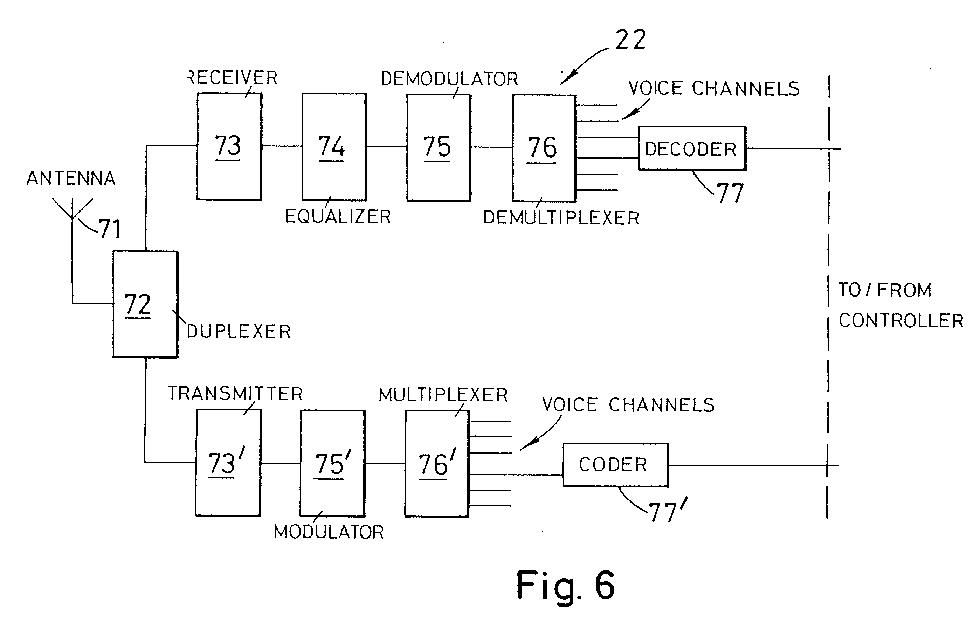

FIG. 6 illustrates a typical base station 22. Signals are received from antenna 71, routed through a duplexer 72 to a receiver 73 of conventional design. The receiver 73 is followed by an equalizer 74 which couples equalized signals to a demodulator 75 and demultiplexer 76. The signals from demultiplexer 76 are decoded in a decoder 77 for coupling to switching network 24 (see, FIG. 1). The transmitter channel of the station 22 basically performs the same functions in reverse order with the exception of the equalization, which is not needed. Thus, this channel includes coder 77′, multiplexer 76′, modulator 75′ and transmitter 73′. A common reference oscillator 78 feeds receiver 73 and transmitter 73′.

Note that once the each signal is demodulated (or modulated) in station 22, the essential functions of the base station are complete. Multiplexing/demultiplexing, coding/decoding, and switching may be performed on site or remotely. The choice of location for these last elements is purely an economic one based on total system design.

In all cases, it is understood that the above-identified arrangements are merely illustrative of the many possible specific embodiments which represent applications of the present invention. Numerous and varied other arrangements can readily be devised in accordance with the principles of the present invention without departing from the spirit and scope of the invention.

## Claims

1. A cellular communication system for use over an area comprised of a plurality of cellular regions and with low-power remote stations able to transmit low-power remote station transmit radio signals at a low-power remote station transmit frequency and at a first power level, comprising:
a number of base station means, each given base station means being associated with a different one of said cellular regions and being capable of: (i) receiving radio signals transmitted at a base station receive frequency and at a second power level greater than said first power level within the cellular region associated with the given base station means; and (ii) transmitting radio signals at a base station transmit frequency within the cellular region associated with said given base station means;
and a number of local access base station means divided into one or more groups each of which being associated with a different one of said cellular regions, each local base station means in a group being further associated with a different sub-cellular region of the cellular region associated with the group and each given local base station means being capable of: (i) receiving, low-power remote station transmit radio signals transmitted within the sub-cellular region associated with the given local access base station means and retransmitting the low-power remote station transmit radio signals at said base station receive frequency and at said second power level for receipt by the base station means of the cellular region associated with the given local access base station means.

2. A cellular communication system in accordance with claim 1 wherein:
sub-cellular regions in each given cellular region overlap such that a low-power remote station radio signal transmitted from a point within the given cellular region is received and restransmitted by at least two local access base station means within the given cellular region.

3. A cellular communication system in accordance within claim 1 wherein:
sub-cellular regions in each given cellular region overlap such that the low-power remote station radio signals transmitted from a point in the given cellular region are able to be received and be retransmitted by at least three local access base station means in the given cellular region.

4. A cellular communication system in accordance with claim 1 wherein:
each given local access base station means is further capable of: receiving radio signals transmitted at the base station transmit frequency by the base station means of the cellular region associated with the given local access base station means and retransmitting said received transmitted base station means radio signals at a low-power remote station receive frequency within the sub-cellular region associated with the given local access base station means.

5. A cellular communication system in accordance with claim 1 wherein:
each of said cellular regions has associated with it a different band of frequencies; and the base station means associated with a given cellular region transmits and receives signals in the band of frequencies associated with the given cellular region.

6. A cellular communication system in accordance with claim 1 wherein:
the different bands of frequencies associated with said cellular regions span a frequency range from about 1.5 to 2.5 GHz.

7. A cellular communication system in accordance with claim 1 wherein:
said first power level is equal to or less than about 0.5 W.

8. A cellular communication system in accordance with claim 1 wherein:
said first power level is within the range of 10 to 100 mW.

9. A cellular communication system in accordance with claim 1 further comprising:

switch control means for controlling and routing signals among said number of base station means.

10. A cellular communication system in accordance with claim 9 wherein:

said switch control means communicates with a telephone and data network and routes signals between said base stations means and said network.

11. A method of operating a cellular communication system for use over an area comprised of a plurality of cellular regions and with low-power remote stations able to transmit low-power remote station transmit radio signals at a low-power remote station transmit frequency and at a first power level, comprising:

providing a number of base station means, each given base station means being associated with a different one of said cellular regions;

receiving at each given base station means radio signals transmitted at a base station receive frequency and at a second power level greater than said first power level within the cellular region associated with the given base station means;

transmitting at each given base station means radio signals at a base station transmit frequency within the cellular region associated with the given base station means;

providing a number of local access base station means divided into one or more groups each of which being associated with a different one of said cellular regions, each local base station means in a group being further associated with a different subcellular region of the cellular region associated with the group;

and receiving at each given local base station means, low-power remote station transmit radio signals transmitted within the sub-cellular region associated with the given local access base station means and retransmitting the low-power remote station transmit radio signals at a base station receive frequency and at said second power level for receipt by the base station means of the cellular region associated with the given local access base station means.

12. A method of operating a cellular communication system in accordance with claim 11 wherein:

sub-cellular regions in each given cellular region overlap such that a low-power remote station radio signal transmitted from a point within the given cellular region is received and restransmitted by at least two local access base station means within the given cellular region.

13. A method of operating a cellular communication system in accordance within claim 11 wherein:

sub-cellular regions in each given cellular region overlap such that the low-power remote station radio signals transmitted from a point in the given cellular region are able to be received and be retransmitted by at least three local access base station means in the given cellular region.

14. A method of operating a cellular communication system in accordance with claim 11 further comprising:

receiving at each given local access base station means radio signals transmitted at the base station transmit frequency by the base station means of the cellular region associated with the given local access base station means and retransmitting said received transmitted base station means radio signals at a low-power remote station receive frequency within the sub-cellular region associated with the given local access base station means.

15. A method of operating a cellular communication system in accordance with claim 11 wherein:

each of said cellular regions has associated with it a different band of frequencies; and the base station means associated with a given cellular region transmits and receives signals in the band of frequencies associated with the given cellular region.

16. A method of operating a cellular communication system in accordance with claim 15 wherein:

the different bands of frequencies associated with said cellular regions span a frequency range from about 1.5 to 2.5 GHz.

17. A method of operating a cellular communication system in accordance with claim 11 wherein:

said first power level is equal to or less than about 0.5 W.

18. A method of operating a cellular communication system in accordance with claim 11 wherein:

said first power level is within the range of 10 to 100 mW.

19. A method of operating a cellular communication system in accordance with claim 11 further comprising:

controlling and routing signals among said number of base station means.

20. A method of operating a cellular communication system in accordance with claim 19 wherein:

said step of controlling and routing signals includes communicating with a telephone and data network and routing signals between said base stations means and said network.

21. A cellular communication system for use over an area comprising a plurality of cellular regions in each of which regions a plurality of low-power remote stations each transmit low-power remote station radio signals at a respective remote station frequency and at first power level, said system including:

a plurality of base stations each associated with a respective cellular region, each base station being capable of (i) receiving radio signals which are transmitted at a base station receive frequency and at a second power level greater than said first power level within the associated cellular region and (ii) transmitting radio signals at a base station transmit frequency within the associated cellular region;

a plurality of local access base stations divided into one or more groups each of which is associated with a different cellular region, each local access base station in a group being associated with a different sub-cellular region of the cellular region associated with the group, each local access base station being capable of receiving the low power remote station radio signals transmitted from low-power remote stations in the respective sub-cellular region and re-transmitting the low-power remote station signals at a second power level,

the arrangement being such that the sub-cellular regions of two or more local access base stations overlap so that a low-power remote station signal transmitted from a point within the overlapping regions is received by, and retransmitted from, said two or more local access base stations, at the same base station frequency and that each base station receives the signals re-transmitted from said two or more associated local access base station at the same base station frequency and at the second power level, said base station incuding means for equalising the respective received and delayed signals in order to enhance signal strength and to provide redundancy.

22. A system according to Claim 21 wherein said local access base stations also include means for equalising the respective receiving and delayed signals in order to enhance signal strength and to provide redundancy.

23. A system according to Claim 21 or 22 wherein said low power remote stations also include means for equalising the respective received and delayed signals in order to enhance signal strength and to provide redundancy.

MS

PS

LABS

LABS

25

25

LABS

25

BASE STATION

22

23

COVERAGE BOUNDARY

2

1

MS

LABS

25

LABS

PS

PS

LABS

LABS

25

BASE STATION

22

23

SWITCHING NETWORK
AND
SYSTEM CONTROLLER

24

26

TO TELEPHONE NETWORK

23'

TO OTHER
SYSTEM CONTROLLERS

Fig. 1

# Fig. 2

# Fig. 3

Fig. 4

EP 0 418 096 A2

Fig. 5

AMPLIFIER / EQUALIZERS

FILTER / COMBINER

FILTER / SPLITTER

25

66

65

64

MIXER

63

31, f2$_a$

32, f2$_a'$

DUPLEXER

67

65

65

69

62

32, f1$_a'$

31, f1$_a$

MIXER

63'

64'

65'

65'

66'

DUPLEXER

FILTER / SPLITTER

65'

FILTER / COMBINER

RECEIVER / TRANSMITTER

93

POWER SUPPLY

AMPLIFIER / EQUALIZERS

92

91

TO ALL AMPLIFIER / EQUALIZERS AND POWER SUPPLY

PROCESSOR / CONTROLLER

EP 0 418 096 A2

Fig. 6